# EUROPÄISCHE PATENTANMELDUNG

(11) **EP 2 099 265 A2**
(43) Veröffentlichungstag der Anmeldung: **09.09.2009**
(21) Anmeldenummer: 09100144.6
(22) Anmeldetag: 25.02.2009
(51) Int. Cl.: H05K 1/02

(54) **Leiterbahnanordnung zum Kontaktieren elektronischer Bauteile**

(30) Priorität: 04.03.2008 DE 102008012572
(71) Anmelder: Continental Automotive GmbH, 30165 Hannover (DE)
(72) Erfinder: Bartholomäus, Ulf, 78112, St. Georgen (DE); Hanke, Klausdieter, 78050, Villingen-Schwenningen (DE); Hildebrandt, Jens, 78052, Villingen-Schwenningen (DE); Kolar, Anton, 78052, Villingen-Schwenningen (DE)

(57) **Zusammenfassung**

Vorgeschlagen ist eine Leiterbahnanordnung zum Kontaktieren elektronischer Bauteile mit wenigstens einer Leiterbahnebene, die zumindest eine Leiterbahn (80) aufweist sowie jeweils eine oberhalb und unterhalb der wenigstens einen Leiterbahnebene (81) angeordnete Mäanderlage (48). Anschlüsse (30A) auf einer Hauptseite der Leiterbahnanordnung sind mit Durchkontaktierungen (92,95D) verbunden, welche die zumindest eine Leiterbahn der Leiterbahnebene und wenigstens eine der Mäanderlagen elektrisch kontaktieren. Des Weiteren umfasst die Leiterbahnanordnung ein in einem Gehäuse untergebrachtes elektronisches Bauelement (11) zur Überwachung der zumindest einen Leiterbahn und der Mäanderlage. Dieses ist fest auf der Hauptseite angeordnet und weist Kontaktelemente (111) auf, die den Anschlüssen gegenüberliegen und diese kontaktieren.

## Beschreibung

Die Erfindung betrifft eine Leiterbahnanordnung zum Kontaktieren elektronischer Bauteile.

Um mehrere elektronische Bauelemente miteinander zu verbinden, werden sehr häufig Leiterplatinen mit einer Vielzahl von Leiterbahnen eingesetzt. Unter dem Begriff Leiterplatine wird ein Bauteil verstanden, welches eine oder mehrere isolierende Lagen aufweist, in denen metallische, leitende Verbindungen eingebracht sind. Diese dienen dazu die auf der Platine aufgebrachten elektronischen Bauelemente elektrisch miteinander zu verbinden. Dabei können die elektronischen Bauelemente insbesondere Chips, Speicherbausteine und Logikkomponenten aufweisen.

In einigen Anwendungen ist es erforderlich, ein Auslesen oder Verändern von Dateninhalten in Speicherbausteinen auf der Leiterplatine zu unterbinden. Ebenso kann es wünschenswert sein, ein Ausspähen oder eine Manipulation einer Signalverarbeitung zu verhindern. Mit anderen Worten soll der physikalische Zugriff auf externe Schnittstellen der elektronischen Bauelemente verhindert werden. Wenn dies nicht erfolgreich ist, sollten nach einer Detektion eines Manipulationsversuches Gegenmaßnahmen ergriffen werden.

Eine Möglichkeit elektronischer Bauelemente vor einem unberechtigten Zugriff zu schützen, ist in der US-Norm FIPS-140-2 beschrieben. Dabei wird das zu schützende Bauelement in einem sicheren Gehäuse gekapselt, in dem zusätzlich Überwachungseinrichtungen untergebracht sein können. Diese erkennen eine mögliche Verletzung der Integrität des Gehäuses und löschen in diesem Fall schützenswerte Geheimnisse in den durch das Gehäuse umschlossenen Bauelementen.

Gehäuse der eingangs genannten Art bilden in der Regel einen Käfig aus mäanderförmig angeordneten Leiterbahnen um den zu schützenden Bereich, dessen Durchdringung entweder die Leiterbahnen unterbricht oder eine leitfähige Verbindung zu anderen Bereichen herstellt. Dies lässt sich durch die innerhalb des Käfigs angeordnete Überwachungseinrichtung detektieren.

Jedoch ist die Herstellung derartiger sicherer Leiterbahnanordnungen aufwändig und mit hohen Kosten verbunden. Es ist daher wünschenswert, eine Leiterbahnanordnung vorzusehen, bei der die Herstellungskosten reduziert sind und gleichzeitig eine ausreichende Sicherheit gegen Manipulationsversuche gewährleistet ist.

Diesem Bedürfnis wird durch den Gegenstand des unabhängigen Patentanspruchs Rechnung getragen. Weiterbildende Maßnahmen und vorteilhafte Ausgestaltungen der Erfindung ergeben sich aus den Unteransprüchen.

Eine Ausgestaltungsform der Erfindung zeichnet sich aus durch eine Leiterbahnanordnung zum Kontaktieren elektronischer Bauteile mit wenigstens einer Leiterbahnebene, die zumindest eine Leiterbahn aufweist. Jeweils oberhalb und unterhalb der wenigstens einer Leiterbahnebene ist eine Mäanderlage angeordnet. Ebenso sind auf einer Hauptseite der Leiterbahnebene Anschlüsse vorgesehen, die mit Durchkontaktierungen verbunden sind. Die Durchkontaktierungen kontaktieren zumindest die eine Leiterbahn der Leiterbahnebene und wenigstens eine der Mäanderlagen elektrisch.

Die Leiterbahnanordnung zeichnet sich ferner durch ein in einem Gehäuse untergebrachtes elektronisches Bauelement zur Überwachung der zumindest einen Leiterbahn und der Mäanderlage aus. Das Gehäuse mit dem elektronischen Bauelement ist dabei fest auf der Hauptseite angeordnet und weist zudem Kontaktelemente auf, die den Anschlüssen auf der Hauptseite der Leiterbahn gegenüberliegen und diese kontaktieren.

Erfindungsgemäß werden somit nicht komplette Bauteile mit ihren Gehäusen geschützt, sondern vor allem die Elemente, die gegen Manipulationsversuche besonders gefährdet sind.

Zu diesem Zweck ist vorgesehen, vor allem die nach extern führenden Verbindungen der verschiedenen in einem Gehäuse untergebrachten Bauelemente sowie deren Verbindungen untereinander - über Bauteilanschlüsse und Leiterbahnen der Platine vor einem Manipulationszugriff zu schützen. Durch die feste Anordnung des in dem Gehäuse untergebrachten Bauelements auf der Oberseite der Leiterbahnanordnung wird für die nach außen führenden Anschlüsse des elektronischen Bauelementes ein sicherer Schutz vor einem physikalischen Zugriff gebildet. Die Überwachung der zumindest einen Leiterbahn und der Mäanderlage erlaubt es mit Vorteil, Manipulationsversuche in der Leiterbahnebene beziehungsweise an den Mäanderlagen zu erkennen und entsprechende Maßnahmen zu ergreifen.

Damit vereinfacht sich die Herstellung der erfindungsgemäßen Leiterbahnanordnung beträchtlich, da elektronische Standardbauelemente für die Leiterbahnanordnung verwendet werden können.

In einer vorteilhaften Weiterbildung der Erfindung zeichnet sich die Leiterbahnanordnung weiterhin dadurch aus, dass das elektronische Bauelement einen flüchtigen Speicher aufweist. Es ist mit Vorteil ausgestaltet, bei einer Detektion eines Manipulationsversuches der zumindest einen Leiterbahn oder der Mäanderlage einen Inhalt des flüchtigen Speichers zu löschen. Damit kann auf besonders einfache Weise ein zu schützendes Geheimnis in dem flüchtigen Speicher bei einem detektierten Manipulationsversuch gelöscht und ein unbefugtes Auslesen oder Verändern der Daten verhindert werden.

In einer anderen Weiterbildung der Erfindung umfasst die Leiterbahnanordnung zumindest ein weiteres elektronisches Bauelement, das auf der Hauptseite fest angeordnet ist und Kontaktelemente aufweist. Die Kontaktelemente liegen wenigstens einem Anschluss gegenüber und kontaktieren diesen, wobei der Anschluss elektrisch mit der zumindest einen Leiterbahn verbunden ist.

Mit Vorteil kann so das elektronische Bauelement zur Überwachung sowohl der Leiterbahnen und der Mäanderanordnung als auch des zusätzlichen elektronischen Bauelements eingesetzt werden. Dies erlaubt es, als elektronische Bauelemente verschiedene Standardbauteile zu verwenden und diese mit einem einzelnen elektronischen Bauelement zu überwachen und gegen Manipulationen zu schützen. Dadurch werden eine hohe Flexibilität und verschiedene Einsatzmöglichkeiten der erfindungsgemäßen Leiterbahnanordnung realisiert.

In einer anderen Weiterbildung umfasst das elektronische Bauelement mehrere Kontaktelemente in form eines Ball Grid Arrays. Zudem ist es über ein Zwischenräume auffüllendes Vergussmaterial mit der Hauptseite der Leiterbahnanordnung fest verbunden. Dadurch wird mit Vorteil ein großer physikalischer Schutz der Kontaktelemente des elektronischen Bauelementes erreicht. Bei dem Versuch, das Vergussmaterial zu lösen, werden die Kontaktelemente des elektronischen Baumaterials beschädigt und ein Manipulationsversuch sicher erkannt. Mit Vorteil kann das Vergussmaterial zudem aus einem ähnlichen Material wie die Leiterbahnanordnung beziehungsweise wie das Gehäuse oder das Ball Grid Array des elektronischen Bauelementes sein. Ein Versuch, das elektronische Bauelement somit auf chemischem Wege von der Leiterbahnanordnung zu lösen, führt damit zu einer Beschädigung und Zerstörung des Gehäuses beziehungsweise der Kontaktelemente. Ein Manipulationsversuch kann somit ebenfalls verhindert werden.

In einer weiterbildenden Maßnahme ist die zumindest eine Leiterbahnebene mit einer Leiterbahn vorgesehen, welche mit einem Massepotential beaufschlagt ist. Das zur Überwachung vorgesehene Bauelement überwacht die Leiterbahn, welche mit einem Massepotential beaufschlagt ist. Eine Änderung über einen vorgesehenen Schwellwert wird als Manipulationsversuch gewertet und entsprechende Gegenmaßnahmen getroffen. Die Überwachung einer Leiterbahn beaufschlagt mit einem Massepotential ist besonders einfach und lässt sich mit Standardbauelementen realisieren.

In einer anderen Weiterbildung der Erfindung ist die obere Mäanderlage über eine durch die wenigstens eine Leiterbahnebene hindurchführende Kontaktierung mit der unteren Mäanderlage elektrisch leitend verbunden. Dadurch kann das zur Überwachung vorgesehene Bauelement beide Mäanderlagen elektronisch überwachen und Manipulationsversuche erfassen.

Besonders vorteilhaft ist es, wenn ein Aufzeichnungs-und/oder Anzeigegerät für ein Kraftfahrzeug, z. B. ein Tachograph oder ein Mautgerät oder ein Datenrekorder oder ein Anzeigeinstrument, eine erfindungsgemäße Leiterbahnanordnung aufweist.

Im Weiteren wird die Erfindung anhand verschiedener Ausführungsformen unter Bezugnahme auf die Zeichnungen im Detail erläutert. Es zeigen:
- Figur 1: eine Querschnittsansicht einer Ausführungsform einer Leiterbahnanordnung mit darauf befestigten Halbleiterchips,
- Figur 2: eine Draufsicht einer Ausführungsform einer Leiterbahnanordnung mit darauf befestigten Halbleiterchips.

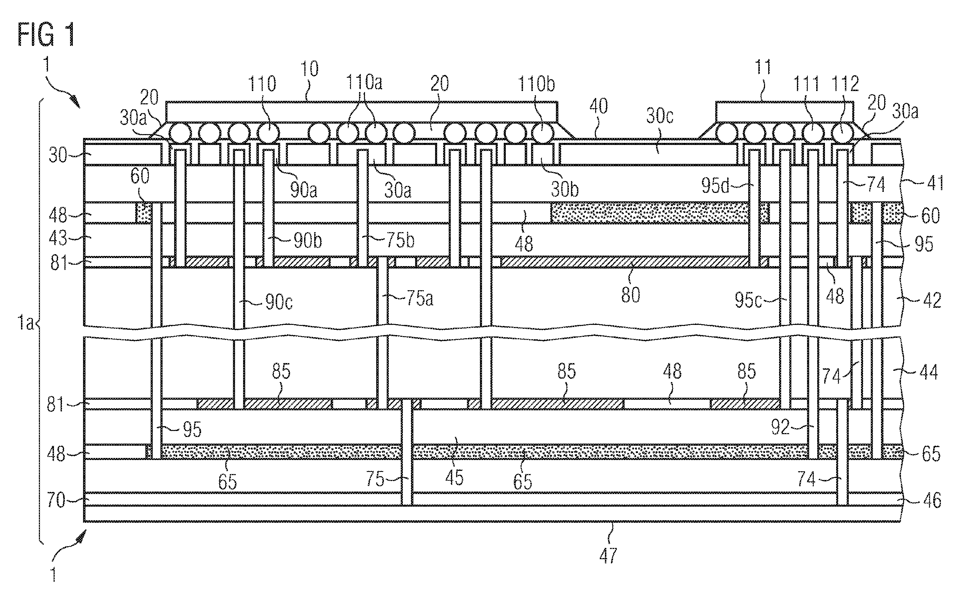

Figur 1 zeigt eine Querschnittsdarstellung einer Ausführungsform einer Leiterbahnanordnung 1a mit darauf befestigten Halbleiterchips 10 und 11. Diese enthalten elektronische Bauelemente, gebildet in einem Halbleitersubstrat und von einem mechanisch und chemisch stabilen Gehäuse umschlossen. Auf einer Seite sind Kontakte in Form eines Ball Grid Arrays angeordnet. Über diese Kontakte werden Versorgungsstrom und - Spannung zugeführt, aber auch Daten und Steuersignale. Das elektronische Bauelement, welches gleichwertig zu dem Begriff Halbleiterchip zu verstehen ist kann somit über die Kontaktelemente des Ball Grid Arrays Signale abgeben und empfangen.

Bei der Erfindung ist vorgesehen, nicht die kompletten Bauteile mit ihren Gehäusen von Mäanderlagen zu umgeben, sondern lediglich die außerhalb der Gehäuse geführten Leitungsverbindungen zu schützen. Es wird davon ausgegangen, dass die Halbleiterchips selbst in ihrem Gehäuse vor physikalischen Zugriffen geschützt sind.

Im vorliegenden Ausführungsbeispiel sind die beiden Halbleiterchips 10 und 11 auf ihrer der Leiterplatine 1a zugewandten Seite mit Kontaktstellen in Form eines Ball Grid Arrays ausgeführt. Diese beinhalten eine Vielzahl kugelförmiger metallischer Kontakte 110, 110a, 110b sowie 111, 112. Zur Befestigung der beiden Halbleiterchips 10 und 11 ist ein Vergussmaterial 20 in den Zwischenräumen zwischen den Ball Grid Arrays mit den einzelnen Kontaktelementen 110, 110a, 110b, 111 und 112 und der Oberfläche der Leiterplatine 1a eingebracht. Diese fixiert den Halbleiterchip fest an der Oberfläche der Leiterplatine 1a und umgibt zudem die einzelnen Kontaktelemente des Ball Grid Arrays.

Vorzugsweise ist das Vergussmaterial nicht transparent, hart und besitzt ähnliche chemische Eigenschaften wie das Gehäuse der Halbleiterchips beziehungsweise das Ball Grid Array. Dadurch werden bei einem chemischen Ablöseversuch auch die Kontaktstellen des Halbleiterchips beschädigt und der Chip damit unbrauchbar. Des Weiteren ist das Vergussmaterial zwar hart aber auch spröde, sodass es auch mechanischen Ablöseversuchen widerstehen kann. Die Eigenschaften sorgen zudem dafür, dass bei einem mechanischen Ablöseversuch der Halbleiterchip 10 beziehungsweise 11 bricht und damit ebenfalls unbrauchbar wird.

Die Leiterplatine 1a besitzt an ihrer Oberseite eine dünne Isolationsschicht 40, die in den Bereichen der Kontaktelemente des Ball Grid Arrays durchbrochen ist. Unterhalb der isolierenden Schicht 40 sind über den Elementen der Kontaktstelle des Halbleiterchips 10 beziehungsweise 11 und des Ball Grid Arrays leitende Kontakte 30, 30a sowie 30b und 30c angeordnet. Diese sind aus einem nichttransparenten Material ausgestaltet und kontaktieren die jeweiligen Ball Grids 110, 110a, 110b sowie 111 und 112 der beiden Ball Grid Arrays. Einige der Kontaktierungen der Halbleiterchips und der zugehörigen Ball Grids 110b sind zwar ebenfalls mit Kontakten verbunden, diese sind aber nicht weiter an innerhalb der Leiterplatine 1a verlaufender Leitungen angeschlossen. Die Kontakte, von denen hier beispielhaft der Kontakt 30b hervorgehoben ist, sind dementsprechend blind und nicht mit weiteren Durchkontaktierungen verbunden.

Unterhalb der ersten Kontaktschicht ist eine Isolationsschicht 41 angeordnet, an die sich eine weitere Ebene mit einem darin angeordneten ersten Mäander 60 anschließt. Die Isolationsschicht kann aus einem nichttransparenten Material beispielsweise einem Epoxydharz gebildet sein. Die Mäanderlage 60 ist in einigen Gebieten 48 unterbrochen, so dass hier Durchkontaktierungen 90b, 75b sowie 95c angeordnet sind. Die Durchkontaktierungen sind beispielsweise als so genannte Buried Vias vorgesehen und erlauben innere Schichten der Halbleiteranordnung mit den entsprechenden Kontakten 30a bzw. den Ball Grids zu verbinden und damit die Halbleiterchips zu kontaktieren. Die Durchkontaktierungen können vollständig oder auch nur teilweise mit einem leitenden Material gefüllt sein.

Die Halbleiteranordnung weist darüber hinaus eine Vielzahl von Leiterbahnebenen 81 auf, die jeweils zwischen isolierenden Ebenen 42 und 43 beziehungsweise 44 und 45 angeordnet sind. In diesen Leiterbahnebenen sind Leiterbahnen 80 vorgesehen, die jeweils mit Durchkontaktierungen verbunden sind.

Beispielsweise ist die Leiterbahn 80 der ersten Leiterbahnebene 81 über eine erste Durchkontaktierung 74 mit einer Kontaktstelle 112 des Chips 11 elektrisch leitend verbunden. Eine zweite Durchkontaktierung führt von der Leiterbahnebene 81 zu der zweiten Leiterbahnebene. Hingegen verbindet die Durchkontaktierung 90b eine der Leiterbahnen 80 in der ersten Leiterbahnebene.

Die verschiedenen Leiterbahnen 80 der Leiterbahnebene 81 ermöglichen es somit, die unterschiedlichen Halbleiterchips 10 und 11 über die jeweiligen durch die Mäanderlage 60 hindurchreichende Kontaktierungen elektrisch leitend zu verbinden.
Dadurch wird ein Daten- und Signalaustausch zwischen den einzelnen Halbleiterchips 10 und 11 möglich. Gleichzeitig werden über diese Durchführungen auch die für den Betrieb notwendige Strom und Spannungen den Chips 10 und 11 zugeführt.

Des Weiteren enthält die Leiterbahnanordnung 11 eine untere Mäanderlage 48 mit einem darin angeordneten Mäander 65. Die Mäander der oberen Mäanderlage sowie der unteren Mäanderlage sind jeweils engmaschig ausgeführt und über Durchkontaktierungen 92 beziehungsweise 95d mit dem Halbleiterchip 11 elektrisch leitend verbunden. Des Weiteren ist im Bereich der Kanten der Leiterbahnanordnung die untere Mäanderlage 65 mit der oberen Mäanderlage 60 über jeweils zwei Durchkontaktierungen 95 elektrisch miteinander gekoppelt. Dadurch wird ein umlaufender Käfig gebildet, der die darin befindlichen Leiterbahnebenen 81 vollständig umschließt. Die Durchkontaktierungen 95 zur Verbindung der beiden Mäanderlagen sind vorzugsweise versteckt und nicht sichtbar ausgeführt.

Letztlich befindet sich auf der unteren Seite der Leiterbahnanordnung und damit der der Chipseite abgewandten Seite eine Massepotentialleitung 70. Diese ist über zwei Durchkontaktierungen 75 mit der unteren Leiterbahnebene 81 elektrisch leitend verbunden. Die untere Leiterbahnebene kontaktiert wiederum über die Durchkontaktierungen 75a und 75b die Kontaktstellen 110a des Halbleiterchips 10. Dadurch wird eine Energieversorgung des Halbleiterchips 10 durch die verschiedenen Leiterbahnebenen hindurch zur Massepotentialleitung 70 gewährleistet. Entsprechend wird auch der Halbleiterchip 11 durch die Durchkontaktierungen 74 mit der Massepotentialleitung elektrisch leitend verbunden. Die beiden Durchkontaktierungen 74 und 75 reichen durch die Mäanderlagen 65 beziehungsweise 60 hindurch und sind von diesem zudem elektrisch isoliert.

Abschließend ist eine weitere Schicht 47 aufgebracht, die einerseits als Lötstoppmaske fungieren kann und zudem nicht transparent ausgebildet ist. Sie versperrt so eine Sicht auf die einzelnen Leiterbahnebenen.

Um Schutz vor dem Entfernen eines der geschützten Bauteile beispielsweise der beiden Chips 10 und 11 oder eine Signalerfassung auf den Datenleitungen der Leiterbahnanordnung 1a zu gewährleisten, wird ein Überwachungschip 11 eingesetzt. Dieser umfasst einen flüchtigen Speicher, welcher zu schützende Geheimnisse. Die Geheimnisse können beispielsweise kryptografische Schlüssel umfassen, die zur Verarbeitung von Daten in dem Halbleiterchip 10 benötigt werden. In einem Betrieb der Leiterbahnanordnung übermittelt er den Schlüssel an den Halbleiterchip 10, der sie für den Betrieb benötigt und dort entsprechend verarbeitet.

Zur Überwachung der Integrität der Halbleiteranordnung überprüft der Halbleiterchip 11 die Struktur der beiden Mäander sowie den Halbleiterchip 10. Dazu werden beispielsweise bauteilintern verschiedene Anschlüsse des Halbleiterchips 10 über so genannte Presents Detect-Leitungen überwacht. Beispielsweise wird über die Durchkontaktierung 95c und die Leiterbahnebene 85 das Vorhandensein des Chips 10 in regelmäßigen Abständen überprüft. Dies kann beispielsweise dadurch erfolgen, in dem der Widerstand der Anordnung ermittelt und mit einem Schwellwert verglichen wird. Übersteigt der Widerstand einen vorgesehenen Schwellwert, so kann davon ausgegangen werden, dass der Halbleiterchip 10 unbefugterweise entfernt wurde. Der Halbleiterchip 11 löscht dann seine in seinem flüchtigen Speicher abgelegten Schlüssel und verhindert so ein unbefugtes Auslesen. Sofern schützenswerte Inhalte in nichtflüchtigen Speichern des Halbleiterchips 10 abgelegt sind, und der Schlüssel zum Entschlüsseln dazu im flüchtigen Speicher des Halbleiterchips 11 gespeichert ist, wird nach dem Löschen des flüchtigen Speichers auch ein Zugriff und ein Entschlüsseln verschlüsselter Daten im Halbleiterchip 10 unmöglich.

Darüber hinaus überwacht der Halbleiterchip 11 die Existenz und Integrität der beiden Mäanderlagen 65 und 60. Bei einer Beschädigung oder einem Manipulationsversuch an den Mäanderlagen ändert sich beispielsweise deren Kapazität oder deren Widerstand, was durch den Halbleiterchip 11 erfasst wird.

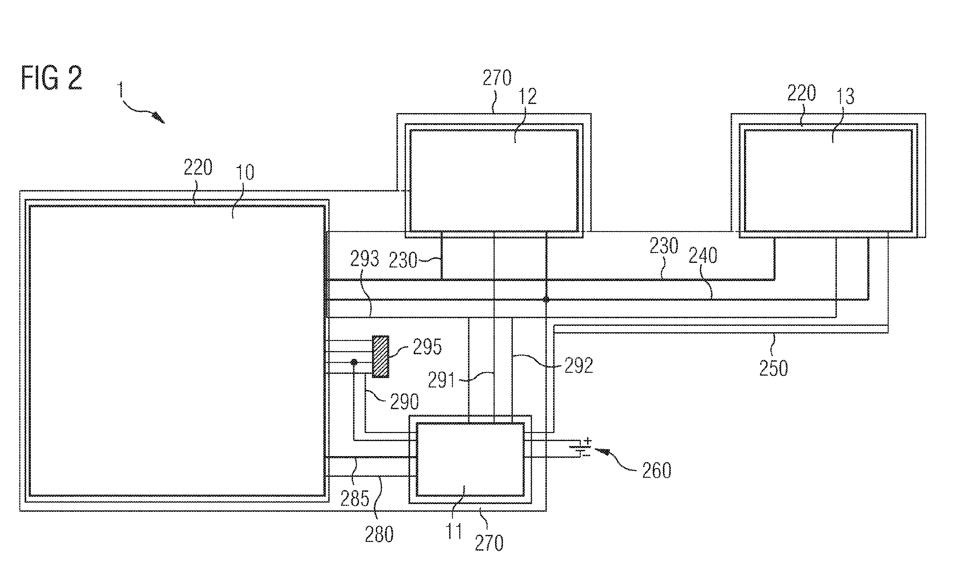

Figur 2 zeigt eine Draufsicht einer Leiterbahnanordnung, die neben einem Überwachungschip 11 auch einen Hauptprozessor 10 sowie einen flüchtigen Speicher 12 und einen nichtflüchtigen Speicher 13 aufweist. In dem Überwachungschip 11, der über eine Datenleitung 285 mit dem Prozessor 10 verbunden ist, ist in einem flüchtigen Speicher ein kryptografischer Schlüssel abgelegt. Mit diesem ist der Hauptprozessor 10 in der Lage, während des Betriebs verschlüsselte, im flüchtige Speicher 12 oder im nichtflüchtigen Speicher 13 abgelegte Daten über die Daten und Adressleitungen 230, 240 zu lesen und zu entschlüsseln. Darüber hinaus ist eine externe Schnittstelle 295 zum Programmieren des Prozessors 10 sowie des nichtflüchtigen Speichers 13 vorgesehen.

Der Überwachungschip 11 umfasst weiterhin mehrere Sensorleitungen 290 bis 293, die jeweils mit der Schnittstelle 295, dem Prozessor 10 oder den beiden Speichern 12 und 13 verbunden sind. An den Sensorleitungen liegt außerhalb eines Betriebs der gesamten Anordnung ein Signal an, welches die physikalische Existenz der Schnittstelle, des Prozessors oder der beiden Speicher überwacht. Wird nun beispielsweise einer der Elemente physikalisch entfernt, so wird dies über die Sensorleitungen detektiert und dem Überwachungschip 11 mitgeteilt. Dieser kann daraufhin geeignete Maßnahmen treffen und beispielsweise seinen flüchtigen Speicher und die darin enthaltenen zu schützenden Daten löschen.

Darüber hinaus umfasst er Sensorleitungen 280, die jeweils mit der oberen Mäanderlage 250 sowie der unteren Mäanderlage 270 gekoppelt sind. Auch diese werden sowohl während des Betriebs der Bausteine 10, 12 und 13 als auch außerhalb des Betriebs der Bausteine auf Beschädigungen und Manipulationsversuche hin überwacht. Bei einem solchen, löscht der Überwachungschip 11 wiederum seinen flüchtigen Speicher.

In einem Ausführungsbeispiel können die Sensorleitungen über die Bauteile 10 12 und 13 mit einem von mehreren Masseanschlüssen der jeweiligen Bauteile verbunden sein. Wird nun eines der überwachten Bauteile von der Platine gelöst, so geht damit die Verbindung der betreffenden Sensorleitungen 291 bis 293 beziehungsweise 290 zur Masseleitung hin verloren und der widerstand ändert sich.

Da der Überwachungschip 11 mit einer vom Rest der Anordnung unabhängigen autonomen Energiequelle 260 versorgt wird, erkennt er eine solche Manipulation sowohl während des Betriebs der Anordnung als auch in einem deaktivierten Betriebszustand der zu schützenden Bauteile. In gleicher Weise kann eine strukturelle Verletzung der beiden Mäanderlagen über eine Änderung des Widerstandes und/oder der Kapazität der Mäanderlagen erkannt werden. Als Reaktion auf eine derartige Verletzung oder auf das Entfernen eines der überwachten Bauteile löscht der Überwachungschip 11 die in seinem flüchtigen Speicher abgelegten Daten.

Neben den Sensorleitungen 291 bis 293, die ein Entfernen der jeweils angeschlossenen Bausteine detektieren, dient die Sensorleitung 290 als "Activity Detect-Leitung", welche dem Überwachungschip 11 mögliche Signale auf der Schnittstelle mitteilt. Aktivitäten, welche die Sicherheit der einzelnen Bausteine 10, 12 und 13 kompromittieren können, werden so auf den überwachten Leitungen der Schnittstelle 295 erkannt.

Die hier vorgestellte Lösung besitzt den Vorteil, keine zusätzlichen Schutzelemente zu den ohnehin in der Fertigung einer derartigen Leiterbahnanordnung eingesetzten Technologien verwenden zu müssen. Dies erlaubt es, mit nur geringen Kosten flexibel eine vertrauenswürdige, das heißt gegen Manipulation und Auslesen geschützte Hardware zu realisieren. Neben dem hier extern angeordneten Überwachungschip 11 lässt sich eine derartige Überwachungsfunktion auch als Teil des Prozessors 10 oder der beiden Speicher 12 beziehungsweise 13 implementieren.

## Patentansprüche

1. Leiterbahnanordnung zum Kontaktieren elektronischer Bauteile mit
- wenigstens einer Leiterbahnebene, die zumindest eine Leiterbahn aufweist;
- je eine oberhalb und unterhalb der wenigstens einen Leiterbahnebene angeordneten Mäanderlage;
- Anschlüsse auf einer Hauptseite der Leiterbahnanordnung, die mit Durchkontaktierungen verbunden sind, welche die zumindest eine Leiterbahn der Leiterbahnebene und wenigstens eine der Mäanderlagen elektrisch kontaktieren;
- ein in einem Gehäuse untergebrachtes elektronisches Bauelement zur Überwachung der zumindest einen Leiterbahn und der Mäanderlage, das fest auf der Hauptseite angeordnet ist, wobei das elektronische Bauelement Kontaktelemente aufweist, die den Anschlüssen gegenüberliegen und diese kontaktieren.

2. Leiterbahnanordnung nach Anspruch 1, bei der das elektronische Bauelement einen flüchtigen Speicher aufweist und das Bauelement ausgestaltet ist, bei einer Detektion einer Manipulation der zumindest einen Leiterbahn und/oder der Mäanderlage einen Inhalt des flüchtigen Speichers zu löschen.

3. Leiterbahnanordnung nach einem der Ansprüche 1 bis 2, bei der das elektronische Bauelement ein Ball Grid Array als Kontaktelemente aufweist und über ein Zwischenräume auffüllendes Vergussmaterial mit der Hauptseite fest verbunden ist.

4. Leiterbahnanordnung nach einem der Ansprüche 1 bis 3 mit zumindest einem weiteren elektronischen Bauelement, das auf der Hautseite fest angeordnet ist und Kontaktelemente aufweist, die wenigstens einem Anschluss, elektrisch verbunden mit der zumindest einen Leiterbahn gegenüberliegen und diesen kontaktieren.

5. Leiterbahnanordnung nach einem der Ansprüche 1 bis 4, bei der zumindest eine Leiterbahnebene mit einer Leiterbahn vorgesehen ist, die mit einem Massepotential beaufschlagt ist.

6. Leiterbahnanordnung nach einem der Ansprüche 1 bis 5, bei der die obere Mäanderlage über eine durch die wenigstens eine Leiterbahnebene hindurchführende Kontaktierung mit der unteren Mäanderlage verbunden ist.

7. Leiterbahnanordnung nach einem der Ansprüche 1 bis 6, bei der die wenigstens eine Leiterbahnebene als auch die Mäanderlagen ein nicht transparentes Material umfassen.
